# FASCICULE DE BREVET EUROPEEN

(11) **EP 3 103 741 B1**
(45) Date de publication et mention de la délivrance du brevet: **04.12.2019**
(21) Numéro de dépôt: 16170912.6
(22) Date de dépôt: 23.05.2016
(51) Int. Cl.: B65G 45/24, B08B 1/02

(54) **INSTALLATION DE TRAITEMENT D'UNE BANDE CONVOYEUSE DE PRODUITS AGROALIMENTAIRES**
ANLAGE ZUR BEARBEITUNG EINES TRANSPORTBANDS FÜR LANDWIRTSCHAFTLICHE NAHRUNGSMITTELPRODUKTE
FACILITY FOR TREATING A CONVEYOR BELT FOR FOOD PRODUCTS

(30) Priorité: 09.06.2015 FR 1555232
(43) Date de publication de la demande: 14.12.2016
(73) Titulaire: Supratec, 91070 Bondoufle (FR)
(72) Inventeur: BOURHIS, Mathieu, 91070 BONDOUFLE (FR)
(74) Mandataire: Dejade & Biset

(56) Documents cités:
- EP-A1- 0 771 745
- WO-A1-2008/059321
- CN-U- 204 223 742
- CN-U- 204 305 836
- DE-A1-102013 105 034
- JP-A- H 058 819
- US-A- 4 960 200
- US-A- 5 024 319

## Description

L'invention a trait au domaine du nettoyage des bandes convoyeuses, et plus particulièrement des bandes convoyeuses destinées au convoyage de produits agroalimentaires.

Le nettoyage des bandes convoyeuses est connu et utilisé depuis de nombreuses années, dans différents secteurs d'activité. On connait, par exemple, des documents WO 2008/059321 (LICITRA) et EP 0 294 690 (KLOSTERMAN), des installations pour le nettoyage de bandes convoyeuses par projection d'une lame d'air et/ou d'eau. Ces installations sont principalement utilisées dans des secteurs d'activité ne nécessitant qu'un nettoyage grossier. Dans ces secteurs d'activité, la présence d'eau sur la bande convoyage n'est pas critique et peut même être un atout, par exemple pour une réduction des poussières volantes lors du convoyage.

Le nettoyage des bandes convoyeuses de produits agroalimentaires revêt un caractère important et présente des contraintes particulières, auxquelles il est nécessaire de répondre au moyen de précautions appropriées.

En premier lieu, des mesures doivent être prises afin de ne pas créer de mélange entre certains produits. Par exemple, une bande convoyeuse peut servir à convoyer, dans un premier temps, des produits secs du type féculents et, dans un second temps, des fruits à coque pouvant provoquer, même à faible dose, des réactions allergiques chez certains consommateurs.

Plus largement, les bandes de convoyage destinées à l'industrie agroalimentaire doivent respecter des règles d'hygiène très strictes, en particulier pour le convoyage de produits frais, par exemple viande, poisson, fromage, ou charcuterie. La présence d'eau sur la bande convoyeuse favorise, entre autre, l'apparition d'un biofilm et la prolifération bactérienne.

L'élimination plus ou moins totale des germes sur la bande convoyeuse, avant son utilisation, peut être une nécessité. On entend ici par « germe » toute entité biologique microscopique unicellulaire ou pluricellulaire, telle que par exemple bactérie, champignon ou algue microscopique, amibe, protiste, ou virus.

On connait du document EP 0 771 745 (SASSI) une installation de traitement d'une bande convoyeuse de produits agroalimentaires, cette installation étant pourvue d'une chambre comprenant au moins une cloison d'enceinte, une fente d'entrée pour l'introduction de la bande convoyeuse, une fente de sortie par laquelle la bande convoyeuse sort de la chambre, une première buse de nettoyage et une seconde buse de nettoyage projetant chacune une solution nettoyante en direction d'une face supérieure et d'une face inférieure de la bande convoyeuse, les buses de nettoyage étant placées au droit de la bande convoyeuse dans une portion où la bande convoyeuse s'étend perpendiculairement à la direction de la pesanteur.

Cette installation comprend une seconde chambre, séparée de la première chambre par une brosse qui frotte la surface supérieure et la surface inférieure de la bande convoyeuse, cette seconde chambre étant équipée de bouches d'aspiration permettant d'aspirer les dernières particules présentes sur la bande convoyeuse et, dans le même temps, de sécher la bande convoyeuse. US 4,960,200 décrit une installation selon le préambule de la revendication 1.

Cette installation de l'art antérieur présente des inconvénients.

En effet, le frottement de la brosse sur la surface supérieure et la surface inférieure de la bande convoyeuse crée des micro-rayures dans lesquelles les germes peuvent se loger et se développer. Le développement des germes étant rapide, le temps écoulé entre le nettoyage et l'utilisation de la bande convoyeuse, aussi court soit-il, peut favoriser leur développement, et, par conséquent, la contamination des produits agroalimentaires convoyés, au risque de devoir détruire les produits convoyés.

Un premier objectif est de proposer une installation de traitement de bandes convoyeuses permettant de limiter le développement d'espèces vivantes sur les bandes convoyeuses traitées.

Un deuxième objectif est de proposer une installation de traitement de bandes convoyeuses ne dégradant pas la bande convoyeuse.

Un troisième objectif est de proposer une installation de traitement de bandes convoyeuses assurant son propre nettoyage.

Un quatrième objectif est de proposer une installation de traitement de bandes convoyeuses adaptable à différents types de bandes convoyeuse.

Un cinquième objectif est de proposer un procédé de traitement d'une bande convoyeuse, au moyen d'une installation répondant aux objectifs précédents.

A cet effet, il est proposé, en premier lieu, une installation de traitement d'une bande convoyeuse de produits agroalimentaires selon l'objet de la revendication 1.

Cette installation offre un nettoyage avancé de la bande convoyeuse. En effet, dans la première zone de traitement, la bande est nettoyée et, dans la seconde zone, la bande subit un traitement qui vise à éliminer toute trace d'organisme vivant. Ainsi la bande convoyeuse peut être de nouveau utilisée pour le transport d'articles agroalimentaires.

Diverses caractéristiques supplémentaires peuvent être prévues, seules ou en combinaison :
- les buses de nettoyage projettent une lame comprenant un mélange d'air et d'eau ;
- la lame comprend également au moins un détergent, issu de synthèse ou d'origine naturelle ;
- la seconde zone de traitement comprend une enceinte ayant une paroi arrière pourvue d'une lumière de sortie permettant la sortie de la bande convoyeuse ;
- la première zone de traitement et la seconde zone de traitement sont adjacentes, la cloison d'enceinte faisant alors la séparation entre la première zone de traitement et la seconde zone de traitement ;
- la première zone de traitement et la seconde zone de traitement sont écartées l'une de l'autre, l'enceinte de la seconde zone de traitement comprenant alors une paroi avant munie d'une lumière d'entrée par laquelle la bande convoyeuse entre dans la seconde zone de traitement ;
- les buses de nettoyage sont orientables, par rapport à un axe perpendiculaire à la bande convoyeuse ;
- la première zone de traitement comprend des buses de nettoyage complémentaires ;
- la chambre comprend des rampes de nettoyage, pour permettre le nettoyage de la chambre ;
- la chambre comprend une paroi inférieure ayant une ouverture, pour permettre l'évacuation de la solution nettoyante.

Il est proposé, en second lieu, un procédé de traitement d'une bande convoyeuse de produits agroalimentaires selon l'objet de la revendication 11.

Avantageusement, la vitesse de défilement de la bande convoyeuse est comprise entre 0,5 et 5 mètres par minute, la vitesse de la solution de nettoyage en sortie de la première buse et de la seconde buse, et le cas échéant en sortie des buses complémentaires de nettoyage, est comprise entre 60 et 150 mètres par seconde, pour une pression comprise entre 50 et 400 millibars relatifs.

Avantageusement, le procédé comprend une étape de chauffe d'eau préalable à l'injection d'eau dans la première buse de nettoyage et la seconde buse de nettoyage et, le cas échéant, dans les buses complémentaires de nettoyage.

Avantageusement, le procédé comprend une étape préalable d'injection d'eau dans l'air avant que l'air ne soit injecté dans la première buse de nettoyage et la seconde buse de nettoyage et, le cas échéant, dans les buses complémentaires de nettoyage. Avantageusement, le procédé comprend une étape de séchage de la bande convoyeuse par l'arrêt de l'injection d'eau dans la première buse de nettoyage et la seconde buse de nettoyage et, le cas échéant, dans les buses complémentaires de nettoyage. D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective de dessus d'une installation de traitement d'une bande convoyeuse ;
- la figure 2 est une vue schématique en coupe de l'installation de la figure 1 ;
- la figure 3 est une vue en perspective de dessus d'une variante de l'installation de traitement ;
- la figure 4 est une vue schématique en coupe de la variante de l'installation de la figure 3 ;
- la figure 5 est une vue similaire à celle de la figure 2, dans laquelle l'installation comprend des rampes de nettoyage pour son propre nettoyage ;
- la figure 6 est une vue en perspective de dessus d'une variante de l'installation de traitement de la figure 1, et

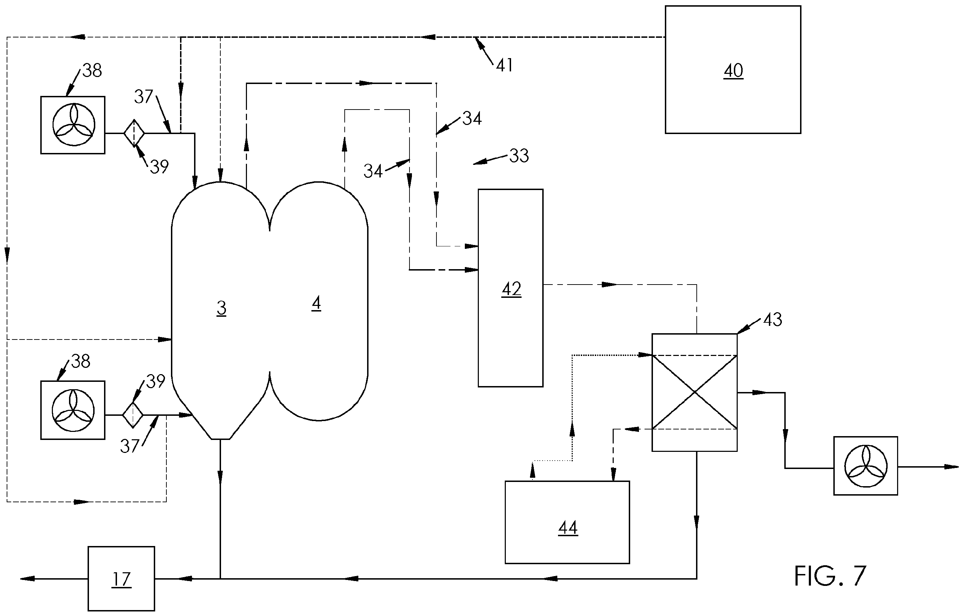

- la figure 7 est un schéma de principe montrant un exemple de gestion des fluides de l'installation de traitement.

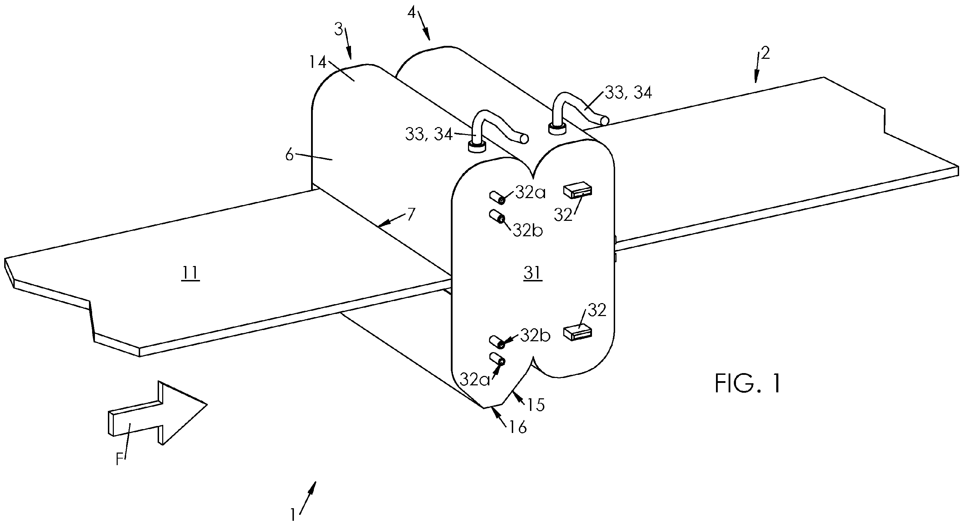

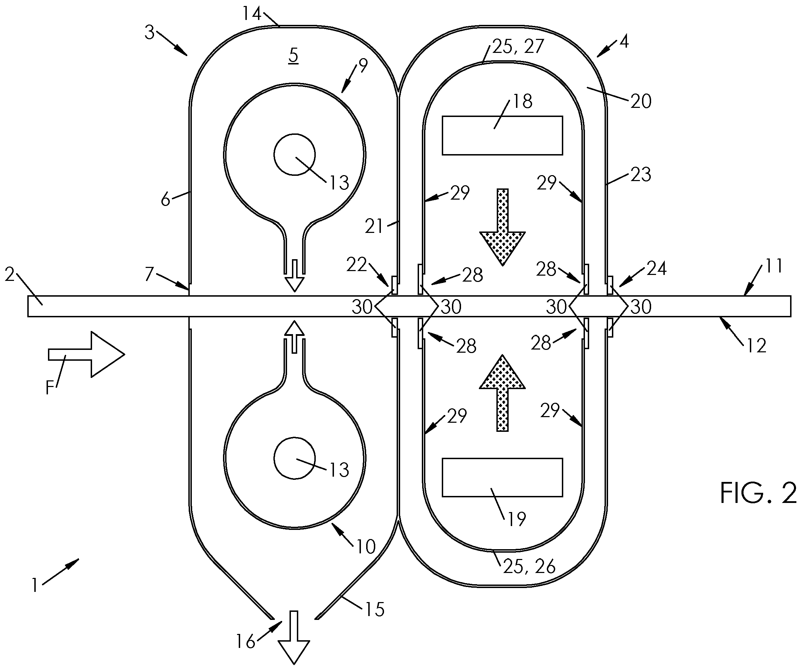

On a représenté, sur la figure 1, en perspective arrière, une installation **1** de traitement d'une bande **2** convoyeuse, et plus particulièrement une bande **2** convoyeuse assurant le convoyage de produits agroalimentaires. Selon un premier mode de réalisation représenté sur les figures 1 et 2, la bande **2** convoyeuse est pleine, c'est à dire dépourvue de toute perforation.

Comme on le voit sur la vue schématique en coupe de la figure 2, l'installation **1** de traitement est pourvue d'une première zone **3** de traitement et d'une seconde zone **4** de traitement. La première zone **3** de traitement comprend une chambre **5** ayant au moins une cloison **6** d'enceinte, une fente **7** d'entrée pour l'introduction de la bande **2** convoyeuse, une fente **8** de sortie par laquelle la bande **2** convoyeuse sort de la chambre **5,** une première buse **9** de nettoyage et une seconde buse **10** de nettoyage projetant chacune une solution nettoyante en direction d'une face **11** supérieure et d'une face **12** inférieure de la bande **2** convoyeuse, comme représenté par les flèches blanches de la figure 2. Les buses **9, 10** de nettoyage sont placées au droit de la bande **2** convoyeuse et comprennent chacune au moins un injecteur **13** dont le rôle sera décrit ci-après.

La solution nettoyante comprend un mélange d'air et d'eau. Toutefois, afin d'améliorer le nettoyage de la bande **2** convoyeuse, la solution nettoyante peut contenir au moins un agent détergent d'origine chimique ou naturelle.

Avantageusement, les buses **9, 10** de nettoyage sont orientables selon un angle de +/- 45° par rapport à un axe **A** sensiblement perpendiculaire à la bande **2** convoyeuse.

En outre, la première zone **3** de traitement comprend une paroi **14** supérieure et une paroi **15** inférieure, la paroi **15** inférieure étant pourvue d'une ouverture **16** par laquelle la solution nettoyante est évacuée de la première zone **3** de traitement, vers une station **17** de dépollution.

La seconde zone **4** de traitement est située après la première zone **3** de traitement, suivant le sens de déplacement de la bande **2** convoyeuse, le sens de déplacement étant représenté par les flèches **F** sur les figures. La seconde zone **4** de traitement, comprend une première rampe **18** de traitement et une seconde rampe **19** de traitement, permettant la projection de vapeur sèche ou d'un rayonnement électromagnétique infrarouge ou d'un rayonnement électromagnétique ultraviolet, en direction de la face **11** supérieure et de la face **12** inférieure de la bande **2** convoyeuse, comme représenté par les flèches grises de la figure 2. En outre, la seconde zone **4** de traitement comprend une enceinte **20** ayant une paroi **21** avant, pourvue d'une lumière **22** d'entrée, et une paroi **23** arrière pourvue d'une lumière **24** de sortie permettant la sortie de la bande **2** convoyeuse.

Avantageusement, la seconde zone **4** de traitement peut permettre la projection de tout autre moyen traitement de la bande **2** convoyeuse, minimisant la dégradation de la bande **2** convoyeuse et minimisant l'utilisation de produits chimiques.

Dans le mode de réalisation représenté sur les figures et selon l'invention, les rampes **18, 19** de la seconde zone **4** de traitement sont entourées par un carter **25** formé d'une partie **26** inférieure et une partie **27** supérieure toutes deux sensiblement en forme de U. La partie **26** inférieure et la partie **27** supérieure se font face en étant écartées l'une de l'autre de sorte à former un passage **28** dans lequel circule la bande **2** convoyeuse. Avantageusement, le carter **25** permet de confiner la vapeur sèche ou les rayonnements électromagnétiques à infrarouge ou à ultraviolet, afin d'améliorer leur effet sur la bande **2** convoyeuse. Lorsque la seconde zone **4** de traitement utilise un rayonnement électromagnétique à infrarouge ou à ultraviolet, la partie **26** inférieure et la partie **27** supérieure du carter **25** peuvent comprendre une face **29** interne, tournée vers les rampes **18, 19,** cette face **29** étant pourvue d'un revêtement réfléchissant.

La seconde zone **4** de traitement comprend également deux paires de rideaux **30** montés sur l'enceinte **20** d'une part, et sur le carter **25** d'autre part. Plus particulièrement, une première paire de rideaux **30** est montée sur la paroi **21** avant au droit de la lumière **22** d'entrée et sur la paroi **23** arrière au droit de la lumière **24** de sortie de l'enceinte **20,** et la deuxième paire de rideaux **30** est montée sur la partie **26** inférieure et la partie **27** supérieure du carter **25,** au droit du passage **28.** Avantageusement, les paires de rideaux **30** sont montées à l'extérieur de l'enceinte **20** et du carter **25,** c'est à dire qu'elles sont respectivement séparées par l'enceinte **20** et le carter **25.**

Les paires de rideaux **30** sont écartées de la bande **2** convoyeuse d'un espace compris entre 1 mm et 20mm. Cet écart permet de maintenir un bon confinement de chacune des deux zones **3, 4** de traitement, sans venir au contact de la bande **2** convoyeuse.

Avantageusement, les paires de rideaux **30** sont réglables en hauteur afin de pouvoir assurer un espace minimal de 1 mm entre les paires de rideaux **30** et la bande **2** convoyeuse, en fonction de l'épaisseur de la bande **2** convoyeuse.

L'installation **1** de traitement comprend, en outre, une façade avant et une façade **31** arrière, permettant de fermer l'installation **1** de traitement avec la cloison **6** d'enceinte de la première zone **3** de traitement et l'enceinte **20** de la seconde zone **4** de traitement. La façade **31** arrière, particulièrement visible sur la figure 1, est pourvue de fiches **32a, 32b** permettant le raccord énergétique et/ou fluidique de l'installation **1** de traitement aux différentes sources énergétiques et/ou fluidiques. L'installation **1** de traitement est également pourvue d'un circuit **33** d'aspiration comprenant des conduites **34** permettant d'effectuer une aspiration d'air humide et/ou vicié dans la première zone **3** de traitement et dans la seconde zone **4** de traitement. Tel qu'on le voit sur la figure 1, la première zone **3** de traitement et la seconde zone **4** de traitement sont pourvues d'une conduite **34** permettant une aspiration, à un niveau supérieur des zones **3, 4** de traitement.

D'autres conduites **34** d'aspiration peuvent être implantées dans l'installation **1** de traitement. En effet, la seconde zone **4** de traitement peut comprendre un nombre supérieur de conduites, ou aucune conduite, par exemple lorsque la seconde zone **4** de traitement utilise un rayonnement électromagnétique à infrarouge ou à ultraviolet. Avantageusement, la première zone **3** de traitement peut comprendre plusieurs conduites **34** d'aspiration pour augmenter l'efficacité du traitement de la bande **2** convoyeuse.

L'installation **1** de traitement permet donc de réaliser deux traitements sur la bande **2** convoyeuse. Un premier traitement, réalisé dans la première zone **3** de traitement, consiste à nettoyer la bande **2** convoyeuse. Un second traitement, réalisé dans la seconde zone **4** de traitement, vise à éliminer tout germe sur la bande **2** convoyeuse.

Avantageusement, les deux zones **3, 4** de traitement sont adjacentes, la cloison **6** d'enceinte étant alors confondue avec la paroi **21** avant de la seconde zone **4** de traitement, la cloison **6** d'enceinte et la fente **8** de sortie de la première zone **3** de traitement disparaissant alors au profit de la paroi **21** avant et de la lumière **22** d'entrée de la seconde zone **4** de traitement. Ainsi, dès que la bande **2** convoyeuse sort de la première zone **3** de traitement, elle entre immédiatement dans la seconde zone **4** de traitement.

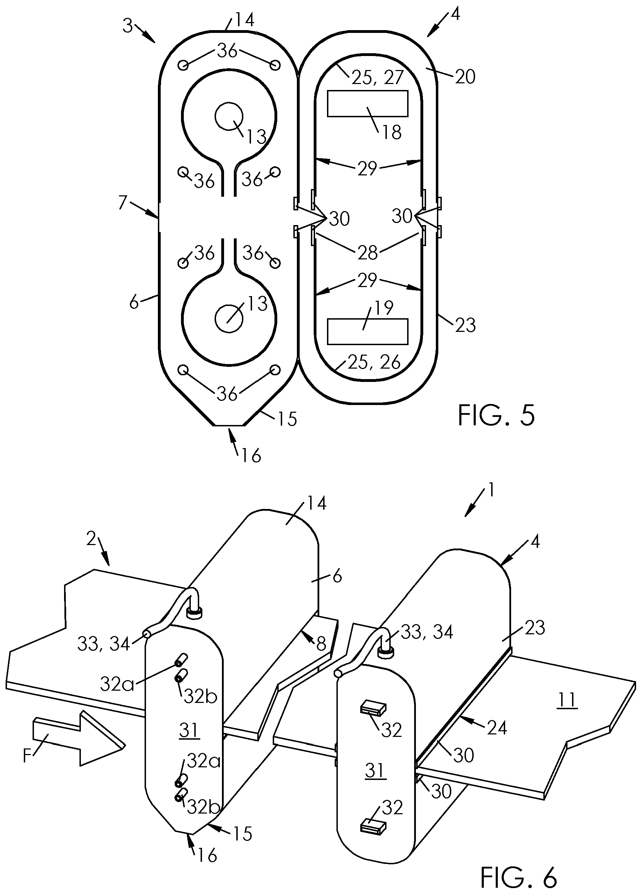

Toutefois, dans un mode de réalisation représenté sur la figure 6, les deux zones **3, 4** de traitement sont écartées l'une de l'autre, la cloison **6** d'enceinte étant alors distincte de la paroi **21** avant de la seconde zone **4** de traitement.

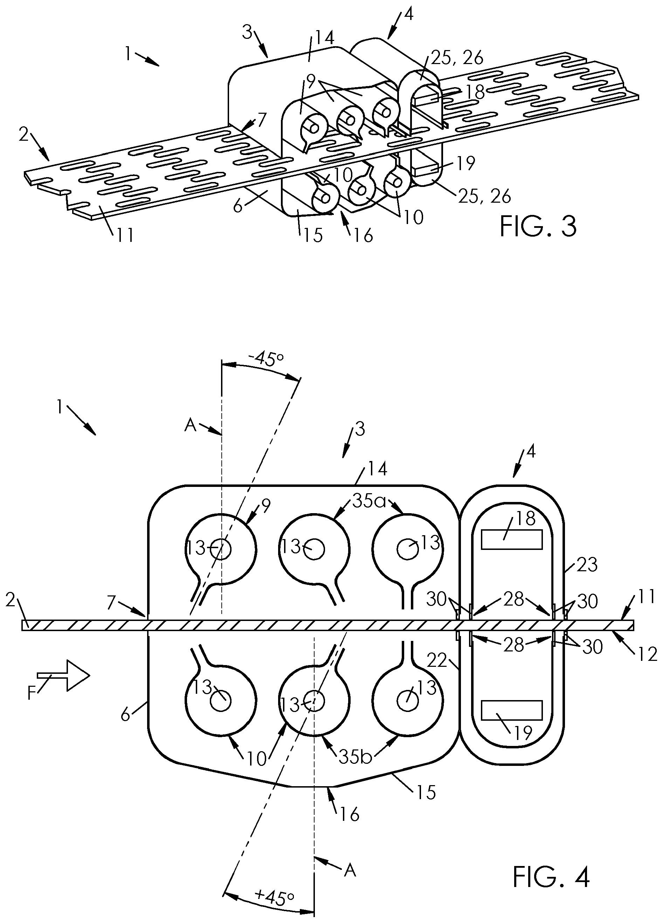

Selon un mode de réalisation particulier représenté sur les figures 3 et 4, la bande **2** convoyeuse n'est pas pleine mais comprend des lumières. Le nettoyage d'une telle bande **2** convoyeuse requiert alors une attention particulière, afin que l'intégralité de la bande **2** convoyeuse soit correctement traitée dans la première zone **3** de traitement.

A cet effet, la première zone **3** de traitement comprend quatre buses **35a, 35b** complémentaires, soit un total de six buses **9, 10, 35a, 35b** de nettoyage, à savoir trois buses **9, 35a** de nettoyage dirigées vers la face **11** supérieure de la bande **2** convoyeuse et trois buses **10, 35b** de nettoyage dirigées vers la face **12** inférieure de la bande **2** convoyeuse. Dans ce mode de réalisation, les buses **9, 10, 35a, 35b** de nettoyage sont réparties par paires, étant entendu qu'une paire de buses **9, 10, 35a, 35b** de nettoyage comprend une buse **9, 35a** de nettoyage dirigée vers la face **11** supérieure de la bande **2** convoyeuse et une buse **10, 35b** de nettoyage dirigée vers la face **12** inférieure de la bande **2** convoyeuse, les deux buses **9, 10, 35a, 35b** de nettoyage d'une même paire étant opposées perpendiculairement par rapport à la bande **2** convoyeuse. Toutefois, les buses **9, 10, 35a, 35b** pourraient ne pas être directement opposées, mais décalées les unes par rapport aux autres, chacune des buses **9, 10, 35a, 35b** n'étant alors pas en vis-à-vis d'une autre buse **9, 10, 35a, 35b.**

Dans un mode de réalisation particulier, chaque paire de buses **9, 10, 35a, 35b** de nettoyage est orientée différemment des autres. En effet, depuis la fente **7** d'entrée vers la fente **8** de sortie, les paires de buses **9, 10, 35a, 35b** de nettoyage sont respectivement orientées à -45°, +45° et en alignement avec l'axe **A** perpendiculaire à la bande **2** convoyeuse.

L'orientation des buses **9, 10, 35a, 35b** de nettoyage permet alors d'atteindre tous les recoins de la bande **2** convoyeuse, lors du premier traitement. Ainsi, l'ensemble de la bande **2** convoyeuse est traitée, ce qui diminue le risque de contamination de la bande **2** convoyeuse en sortie de l'installation **1** de traitement.

Toutefois, l'ajout des buses **35a, 35b** complémentaires pour le traitement d'une bande **2** convoyeuse ajourée n'est pas obligatoire, seules les buses **9, 10** pourraient permettre de réaliser un traitement correct d'une bande **2** convoyeuse ajourée.

Afin d'assurer un bon nettoyage des bandes **2** convoyeuses, l'installation **1** de traitement est pourvue d'un système d'auto-nettoyage, comme illustré sur la vue en coupe de la figure 5. Ce système comprend des rampes **36** de nettoyage placées dans la première zone **3** de traitement, ces rampes **36** de nettoyage projetant une solution sur les buses **9, 10** de nettoyage et la cloison **6** d'enceinte, la paroi **14** supérieure et la paroi **15** inférieure.

Le fonctionnement de l'installation **1** de traitement est assuré au moyen d'un procédé géré par une unité de commande, non représentée sur les figures, ce procédé comprenant les étapes qui suivent.

Tout d'abord, la bande **2** convoyeuse entre dans la première zone **3** de traitement, comme l'illustrent les flèches **F** sur les figures. Avantageusement, la vitesse de défilement de la bande **2** convoyeuse est comprise entre 0,5 et 5 mètres par minute. La vitesse de défilement de la bande **2** convoyeuse est déterminée en fonction de l'encrassement de la bande **2** convoyeuse et de son type, c'est à dire si la bande **2** convoyeuse est pleine ou ajourée. Ainsi, plus la bande **2** convoyeuse est encrassée, plus la vitesse de défilement est basse. De même, la vitesse de défilement sera en principe plus faible pour une bande **2** convoyeuse ajourée que pour une bande **2** convoyeuse pleine.

Dans la première zone **3** de traitement, la bande **2** convoyeuse subit un premier traitement durant lequel les buses **9, 10** de nettoyage projettent une lame de solution nettoyante comprenant un mélange d'eau et d'air en direction de la face **12** inférieure et de la face **11** supérieure de la bande **2** convoyeuse.

Un circuit **37** d'alimentation en air comprenant au moins une source **38** d'alimentation en air est relié à chaque buse **9, 10, 35a, 35b** de nettoyage par les fiches **32a** de la première zone **3** de traitement. Préalablement à son introduction dans les buses **9, 10, 35a, 35b** de nettoyage, l'air traverse au moins un filtre **39,** afin que seul un air pur entre dans les buses **9, 10, 35a, 35b** de nettoyage.

Avant de sortir des buses **9, 10** de nettoyage sous forme de lame d'air, l'air reçoit un ajout d'eau, par l'intermédiaire des injecteurs **13** reliés aux fiches **32b** de la première zone **3** de traitement, raccordant la première zone **3** de traitement à une source **40** d'alimentation en eau, via un circuit **41** d'alimentation en eau. Avantageusement, la source **40** d'alimentation en eau comprend une chaudière permettant de chauffer l'eau avant son entrée dans les buses **9, 10, 35a, 35b** de nettoyage.

Antérieurement à son entrée dans les buses **9, 10, 35a, 35b** de nettoyage, l'air reçoit une petite quantité d'eau, afin d'augmenter son hygrométrie. Cette augmentation de l'hygrométrie permet de limiter l'évaporation, l'évaporation s'accompagnant par une chute de température de la solution nettoyante, ce qui serait préjudiciable à la qualité du traitement de la bande **2** convoyeuse et augmenterait la consommation énergétique de l'installation **1** de traitement.

Afin d'améliorer le nettoyage de la bande **2** convoyeuse, la solution nettoyante peut contenir au moins un agent détergent d'origine chimique ou naturelle.

L'air humidifié entrant dans les buses **9, 10, 35a, 35b** de nettoyage a une pression relative comprise entre 50mbar et 400 mbar, une hygrométrie de 100%, et une température comprise entre 15°C et 25 °C. La pression relative est une pression mesurée ayant pour zéro de référence la valeur de la pression atmosphérique, soit 1013 hPa.

En sortie des buses **9, 10, 35a, 35b** de nettoyage, la solution de nettoyage, c'est à dire le mélange d'air et d'eau, a une pression comprise entre 50mbar et 400mbar, une hygrométrie de 100% et une température comprise entre 10°C et 80°C.

La pression de 50mbar est identifiée comme la pression minimale à partir de laquelle la lame de solution nettoyante permet de nettoyer la bande **2** convoyeuse. La pression de 400mbar est identifiée comme la pression maximale à partir de laquelle le résultat de nettoyage évolue peu, mais à partir de laquelle la consommation énergétique, pour produire une telle pression, devient trop importante au regard du résultat de nettoyage obtenu.

Avantageusement, la lame de solution nettoyante a une épaisseur comprise entre 0.5mm et 40mm. Une épaisseur de lame inférieure ne permettrait pas un nettoyage complet de la bande **2** convoyeuse. En revanche, une lame ayant une épaisseur supérieure à 40mm demanderait une énergie trop importante.

Une fois traitée dans la première zone **3** de traitement, la bande **2** convoyeuse entre dans la seconde zone **4** de traitement dans laquelle la bande **2** convoyeuse sera traitée de sorte à éliminer les germes sur la bande **2** convoyeuse. Ce second traitement consiste en une exposition de la face **11** supérieure et de la face **12** inférieure à une vapeur sèche ou un rayonnement électromagnétique ultraviolet ou un rayonnement électromagnétique infrarouge.

En sortie de la seconde zone **4** de traitement, la bande **2** convoyeuse peut être réutilisée pour le convoyage de produits agroalimentaires.

Les conduites **34** d'aspiration du circuit **33** d'aspiration d'air se rejoignent dans un collecteur **42.** L'air aspiré est ensuite dirigé vers un équipement **43** de filtrage et de condensation, qui permet de condenser l'air afin que l'air rejeté dans l'atmosphère présente une faible hygrométrie, notamment pour les ateliers hydrophobes. L'eau issue de la condensation de l'air est alors évacuée de l'équipement **43** vers la station **17** de dépollution. Un groupe **44** frigorifique permet de refroidir et de fournir un fluide frigorifique à l'équipement **43.** Afin de s'assurer que l'air rejeté ne soit plus souillé, un filtre absolu pourra être positionné en sortie de l'équipement **43.**

L'équipement **43** de dépollution assure un léger refroidissement de l'air aspiré par le passage de l'air refroidi avant son rejet. Ainsi, l'air se condense sous forme d'eau emprisonnant les particules. L'eau et les particules sont alors dirigées vers la station **17** de dépollution.

Selon un mode de réalisation non représenté sur les figures, en sortie du collecteur **42** l'air est rejeté directement dans l'atmosphère, via un filtre retenant les particules solides.

Selon les modes de réalisation représentés sur les figures, l'installation **1** de traitement a une largeur égale à celle de la bande **2** convoyeuse.

Selon un mode de réalisation non représenté sur les figures, l'installation **1** de traitement a une largeur inférieure à celle de la bande **2** convoyeuse. Dès lors, le traitement de la bande **2** convoyeuse se fait par un déplacement mécanisé de l'installation **1** de traitement suivant la largeur de la bande **2** convoyeuse et en réalisant plusieurs passages de la bande **2** convoyeuse, ou en déplaçant la bande **2** convoyeuse suivant des allers-retours jusqu'à ce que toute la largeur de la bande **2** convoyeuse soit traitée.

Avantageusement, la première zone **3** de traitement peut également servir pour le séchage de la bande **2** convoyeuse. Pour ce séchage, l'injection d'eau dans l'air, en amont des buses **9, 10, 35a, 35b** de nettoyage et dans les buses **9, 10, 35a, 35b** de nettoyage, est supprimée, seul de l'air étant envoyé en direction de la face 11 supérieure et de la face **12** inférieure de la bande **2** convoyeuse. Le séchage peut être réalisé par une paire de buses **9, 10, 35a, 35b** de nettoyage, lorsque l'installation **1** de traitement est pourvue des buses **35a, 35b** complémentaires de nettoyage, ou par les buses **9, 10** de nettoyage, au cours d'un passage supplémentaire de la bande **2** convoyeuse si l'installation **1** de traitement ne comporte que les buses **9, 10** de nettoyage.

L'installation **1** de traitement qui vient d'être décrite procure de nombreux avantages parmi lesquels les suivants.

Premièrement, l'installation **1** de traitement offre un nettoyage avancé de la bande **2** convoyeuse. En effet, dans la première zone **3** de traitement la bande **2** convoyeuse est nettoyée et, dans la seconde zone **4** de traitement, la bande **2** convoyeuse subit un traitement qui vise à éliminer les germes. Ainsi, la bande **2** convoyeuse peut être de nouveau utilisée pour le transport d'articles agroalimentaires.

De plus, l'absence de brosse permet d'éviter d'endommager la bande **2** convoyeuse. L'absence de brosse permet également d'éviter le dépôt de germes sur la bande **2** convoyeuse, les brosses constituant une zone de rétention favorable au développement de germes.

Également, l'installation **1** de traitement peut, par son système d'auto-nettoyage, maintenir un environnement sain pour le traitement des bandes **2** convoyeuses.

En outre, l'installation **1** de traitement est adaptable à différents types de bandes **2** convoyeuses, pleines ou non, larges ou étroites, épaisses ou fines.

L'installation **1** de traitement permet aussi de réaliser un nettoyage de la bande **2** convoyeuse en assurant un bon compromis entre la qualité de nettoyage et les consommations énergétique et d'eau requises pour assurer ce nettoyage.

Enfin, l'installation **1** de traitement est autonome et ne nécessite pas l'intervention d'un opérateur pour assurer le bon traitement de la bande **2** convoyeuse ou le déplacement de la bande **2** convoyeuse lorsque l'installation **1** est de largeur inférieure à celle de la bande **2** convoyeuse. Toutefois, un mode manuel de déplacement de l'installation **1** de traitement ou de la bande **2** convoyeuse peut être prévu, éventuellement à l'aide d'outils.

Ainsi, l'installation **1** de traitement qui vient d'être décrite permet de réaliser soit un pré-nettoyage, soit un nettoyage complet et poussé, par exemple par ajout d'un détergent à la solution nettoyante ou l'utilisation des buses complémentaires **35a, 35b,** soit un séchage, lorsque l'injection d'eau dans l'air est coupée, afin de sécher la bande **2** convoyeuse lorsque la présence d'eau sur la bande **2** convoyeuse est critique.

## Revendications

1. Installation (**1**) de traitement d'une bande (**2**) convoyeuse de produits agroalimentaires, cette installation (**1**) étant pourvue d'une première zone (**3**) de traitement et d'une seconde zone (**4**) de traitement, la première zone (**3**) de traitement ayant une chambre (**5**) comprenant au moins une cloison (**6**) d'enceinte, une fente (**7**) d'entrée pour l'introduction de la bande (**2**) convoyeuse, une fente (**8**) de sortie par laquelle la bande (**2**) convoyeuse sort de la chambre (**5**), une première buse (**9**) de nettoyage et une seconde buse (**10**) de nettoyage projetant chacune une solution nettoyante en direction d'une face (**11**) supérieure et d'une face (**12**) inférieure de la bande (**2**) convoyeuse, les buses (**9**, **10**) de nettoyage étant placées au droit de la bande (**2**) convoyeuse dans une portion où la bande (**2**) convoyeuse est sensiblement plane, **caractérisée en ce que** l'installation (**1**) comprend dans la seconde zone (**4**) de traitement, après la chambre (**5**), une première rampe (**18**) de traitement et une seconde rampe (**19**) de traitement permettant la projection de vapeur sèche ou d'un rayonnement électromagnétique infrarouge ou d'un rayonnement électromagnétique ultraviolet, en direction de la face (**11**) supérieure et de la face (**12**) inférieure de la bande (**2**) convoyeuse, les rampes (18,19) de la seconde zone (4) de traitement étant entourées par un carter (25) formé d'une partie (26) inférieure et une partie (27) supérieure toutes deux sensiblement en forme de U.

2. Installation (**1**) selon la revendication 1, **caractérisée en ce que** les buses (**9**, **10**) de nettoyage projettent une lame comprenant un mélange d'air et d'eau.

3. Installation (**1**) selon la revendication 2, **caractérisée en ce que** la lame comprend également au moins un détergent issu de synthèse ou d'origine naturelle.

4. Installation (**1**) selon l'une quelconque des revendications précédentes, **caractérisée en ce que** la seconde zone (**4**) de traitement comprend une enceinte (**20**) ayant une paroi (**23**) arrière pourvue d'une lumière (**24**) de sortie permettant la sortie de la bande (**2**) convoyeuse.

5. Installation (**1**) selon l'une quelconque des revendications précédentes, **caractérisée en ce que** la première zone (**3**) de traitement et la seconde zone (**4**) de traitement sont adjacentes, la cloison (**6**) d'enceinte faisant alors la séparation entre la première zone (**3**) de traitement et la seconde zone (**4**) de traitement.

6. Installation (**1**) selon la revendication 4, **caractérisée en ce que** la première zone (**3**) de traitement et la seconde zone **(**4) de traitement sont écartées l'une de l'autre, l'enceinte (**20**) de la seconde zone (**4**) de traitement comprenant une paroi (**21**) avant munie d'une lumière (**22**) d'entrée par laquelle la bande (**2**) convoyeuse entre dans la seconde zone (**4**) de traitement.

7. Installation (**1**) selon l'une quelconque des revendications précédentes, **caractérisée en ce que** les buses (**9**, **10**) de nettoyage sont orientables par rapport à un axe (**A**) perpendiculaire à la bande (**2**) convoyeuse.

8. Installation (**1**) selon l'une quelconque des revendications précédentes, **caractérisée en ce que** la première zone (**3**) de traitement comprend des buses (**35a, 35b**) de nettoyage complémentaires.

9. Installation (**1**) selon l'une quelconque des revendications précédentes, **caractérisée en ce que** la chambre (**5**) comprend des rampes (**36**) de nettoyage, pour permettre le nettoyage de la chambre (**5**).

10. Installation (**1**) selon l'une quelconque des revendications précédentes, **caractérisée en ce que** la chambre (**5**) comprend une paroi (**15**) inférieure ayant une ouverture (**16**), pour permettre l'évacuation de la solution nettoyante.

11. Procédé de traitement d'une bande (**2**) convoyeuse de produits agroalimentaires au moyen d'une installation (**1**) de traitement selon l'une quelconque des revendications précédentes, **caractérisé en ce qu'**il comprend les étapes consistant à :
- faire défiler la bande (**2**) convoyeuse au travers des deux zones (**3** ; **4**) de traitement ;
- dans la chambre (**5**) de la première zone (**3**) de traitement, projeter, au moins via la première buse (**9**) de nettoyage et la seconde buse (**10**) de nettoyage, une lame de solution nettoyante en direction de la face (**11**) supérieure et la face (**12**) inférieure de la bande (**2**) convoyeuse, et
- dans la seconde zone (**4**) de traitement, projeter de la vapeur sèche ou un rayonnement électromagnétique infrarouge ou un rayonnement électromagnétique ultraviolet, en direction de la face (**11**) supérieure et de la face (**12**) inférieure de la bande (**2**) convoyeuse.

12. Procédé selon la revendication 11, **caractérisé en ce que** la vitesse de défilement de la bande (**2**) convoyeuse est comprise entre 0,5 et 5 mètres par minute, la vitesse de la solution de nettoyage en sortie de la première buse (**9**) et de la seconde buse (**10**), est comprise entre 60 et 150 mètres par seconde pour une pression comprise entre 50 et 400 millibars relatifs.

13. Procédé selon l'une quelconque des revendications 11 ou 12, **caractérisé en ce qu'**il comprend une étape de chauffe d'eau préalable à l'injection d'eau dans la première buse (**9**) de nettoyage et la seconde buse (**10**) de nettoyage.

14. Procédé selon l'une quelconque des revendications 11 ou 12, **caractérisé en ce qu'**il comprend une étape préalable d'injection d'eau dans l'air avant que l'air ne soit injecté dans la première buse (**9**) de nettoyage et la seconde buse (**10**) de nettoyage.

15. Procédé selon l'une quelconque des revendications 11 à 14, **caractérisé en ce qu'**il comprend une étape de séchage de la bande (**2**) convoyeuse par l'arrêt de l'injection d'eau dans la première buse (**9**) de nettoyage et la seconde buse (**10**) de nettoyage.

## Patentansprüche

1. Verarbeitungsanlage (1) eines Förderbandes (2) für Lebensmittelprodukte, wobei diese Anlage (1) mit einem ersten Verarbeitungsbereich (3) und einem zweiten Verarbeitungsbereich (4) bereitgestellt ist, wobei der erste Verarbeitungsbereich (3) eine Kammer (5) aufweist, die wenigstens eine Trennwand (6) der Einfassung, einen Eingangsschlitz (7) zum Einführen des Förderbandes (2), einen Ausgangsschlitz (8), durch den das Förderband (2) aus der Kammer (5) austritt, und eine erste Reinigungsdüse (9) und eine zweite Reinigungsdüse(10) aufweist, die jeweils eine Reinigungslösung in Richtung einer oberen Seite (11) und einer unteren Seite (12) des Förderbandes (2) versprüht, wobei die Reinigungsdüsen (9, 10) jeweils gegenüber von dem Förderband (2) in einem Abschnitt des Förderbandes (2) angeordnet sind, in dem das Förderband (2) deutlich eben ist, **dadurch gekennzeichnet, dass** die Anlage (1) in einem zweiten Verarbeitungsbereich (4) nach der Kammer (5) eine erste Verarbeitungsrampe (18) und eine zweite Verarbeitungsrampe (19) umfasst, die das Versprühen von trockenem Dampf oder einer elektromagnetischen Infrarot-Strahlung oder einer elektromagnetischen Ultraviolett-Strahlung in Richtung der oberen Seite (11) und der unteren Seite (12) des Förderbandes erlauben, wobei die Rampen (18, 19) des zweiten Verarbeitungsbereichs (4) durch ein Gehäuse (25) umgeben sind, das aus einem unteren Teil (26) und einem oberen Teil (27) gebildet ist, die alle zwei deutlich in U-Form sind.

2. Anlage (1) gemäß Anspruch 1, **dadurch gekennzeichnet, dass** die Reinigungsdüsen (9, 10) einen Strahl versprühen, der eine Mischung aus Luft und Wasser umfasst.

3. Anlage (1) gemäß Anspruch 2, **dadurch gekennzeichnet, dass** der Strahl ebenfalls wenigstens ein Reinigungsmittel umfasst, das natürlichen oder synthetischen Ursprungs ist.

4. Anlage (1) gemäß irgendeinem der voranstehenden Ansprüche, **dadurch gekennzeichnet, dass** der zweite Verarbeitungsbereich (4) eine Einfassung (20) mit einer hinteren Wand (23) umfasst, die mit einer Ausgangsöffnung (24) bereitgestellt ist, die das Austreten des Förderbandes (2) erlaubt.

5. Anlage (1) gemäß irgendeinem der voranstehenden Ansprüche, **dadurch gekennzeichnet, dass** der erste Verarbeitungsbereich (3) und der zweite Verarbeitungsbereich (4) anliegend sind, wobei die Trennwand (6) der Einfassung dann die Trennung zwischen dem ersten Verarbeitungsbereich (3) und dem zweiten Verarbeitungsbereich (4) darstellt.

6. Anlage (1) gemäß Anspruch 4, **dadurch gekennzeichnet, dass** der erste Verarbeitungsbereich (3) und der zweite Verarbeitungsbereich (4) voneinander beabstandet sind, wobei die Einfassung (20) des zweiten Verarbeitungsbereichs (4) eine vordere Wand (21) umfasst, die mit einer Einlassöffnung (22) versehen ist, durch die das Förderband (2) in den zweiten Verarbeitungsbereich (4) eintrift.

7. Anlage (1) gemäß irgendeinem der voranstehenden Ansprüche, **dadurch gekennzeichnet, dass** die Reinigungsdüsen (9, 10) im Verhältnis zu einer Achse (A), die zum Förderband (2) lotrecht ist, ausrichtbar sind.

8. Anlage (1) gemäß irgendeinem der voranstehenden Ansprüche, **dadurch gekennzeichnet, dass** der erste Verarbeitungsbereich (3) komplementäre Reinigungsdüsen (35a, 35b) umfasst.

9. Anlage (1) gemäß irgendeinem der voranstehenden Ansprüche, **dadurch gekennzeichnet, dass** die Kammer (5) Reinigungsrampen (36) umfasst, um die Reinigung der Kammer (5) zu erlauben.

10. Anlage (1) gemäß irgendeinem der voranstehenden Ansprüche, **dadurch**
**gekennzeichnet, dass** die Kammer (5) eine untere Wand (15) umfasst, die einen Durchbruch (16) aufweist, um den Austrag der Reinigungslösung zu erlauben.

11. Reinigungsverfahren eines Förderbandes (2) von Lebensmittelprodukten mittels einer Verarbeitungsanlage (1) gemäß irgendeinem der voranstehenden Ansprüche, **dadurch gekennzeichnet, dass** es die Schritte umfasst, bestehend aus:
- Bewegen des Förderbandes (2) durch die zwei Verarbeitungsbereiche (3; 49);
- in der Kammer (5) des ersten Verarbeitungsbereichs (3) wenigstens über die erste Reinigungsdüse (9) und die zweite Reinigungsdüse (10) einen Strahl Reinigungslösung in Richtung der oberen Seite (11) und der unteren Seiten (12) des Förderbandes (2) versprühen und
- in dem zweiten Verarbeitungsbereich (4) Versprühen des trockenen Dampfes oder Projizieren einer elektromagnetischen Infrarot-Strahlung oder einer elektromagnetischen Ultraviolettstrahlung in Richtung der oberen Seite (11) und der unteren Seiten (12) des Förderbandes (2).

12. Verfahren gemäß Anspruch 11, **dadurch gekennzeichnet, dass** die Bewegungsgeschwindigkeit des Förderbandes (2) zwischen 0,5 und 5 Metern pro Minute inbegriffen ist, die Geschwindigkeit der Reinigungslösung am Ausgang der ersten Düse (9) und der zweiten Düse (10) zwischen 60 und 150 Metern pro Sekunde für einen zwischen 50 und 400 relativen Millibar inbegriffenen Druck inbegriffen ist.

13. Verfahren gemäß irgendeinem der Ansprüche 11 oder 12, **dadurch gekennzeichnet, dass** es einen Wassererhitzungsschritt vor dem Einspritzen von Wasser in die erste Reinigungsdüse (9) und die zweite Reinigungsdüse (10) umfasst.

14. Verfahren gemäß irgendeinem der Ansprüche 11 oder 12, **dadurch gekennzeichnet, dass** es einen vorherigen Wassereinspritzschritt in die Luft, bevor die Luft in die erste Reinigungsdüse (9) und die zweite Reinigungsdüse (10) gesprüht wird, umfasst.

15. Verfahren gemäß irgendeinem der Ansprüche 11 oder 14, **dadurch gekennzeichnet, dass** es einen Trockenschritt des Förderbandes (2) per Anhalten des Einspritzens von Wasser in die erste Reinigungsdüse (9) und die zweite Reinigungsdüse (10) umfasst.

## Claims

1. A treatment facility (1) for treating a conveyor belt (2) for conveying agri-food products, this facility (1) being provided with a first treatment zone (3) and a second treatment zone (4), the first treatment zone (3) having a chamber (5) comprising at least one enclosure partition wall (6), an inlet slot (7) for introducing the conveyor belt (2), an outlet slot (8) through which the conveyor belt (2) goes out of the chamber (5), a first washing nozzle (9) and a second washing nozzle (10) each spraying a washing solution towards an upper face (11) and a lower face (12) of the conveyor belt (2), the washing nozzles (9, 10) being placed at right angles to the conveyor belt (2) in a portion where the conveyor belt (2) is substantially planar, **characterised in that** the facility (1) comprises in the second treatment zone (4), after the chamber (5), a first treatment ramp (18) and a second treatment ramp (19) allowing the spraying of dry steam or an infrared electromagnetic radiation or an ultraviolet electromagnetic radiation, towards the upper face (11) and the lower face (12) of the conveyor belt (2), the ramps (18, 19) of the second treatment zone (4) being surrounded by a case (25) formed by a lower part (26) and an upper part (27) both substantially of a U shape.

2. The facility (1) according to claim 1, **characterised in that** the washing nozzles (9, 10) spray a jet comprising an air/water mixture.

3. The facility (1) according to claim 2, **characterised in that** the jet also comprises at least one synthetic or naturally occurring detergent.

4. The facility (1) according to any of the preceding claims, **characterised in that** the second treatment zone (4) comprises an enclosure (20) having a rear wall (23) provided with an outlet port (24) allowing the outlet of the conveyor belt (2).

5. The facility (1) according to any of the preceding claims, **characterised in that** the first treatment zone (3) and the second treatment zone (4) are adjacent, the enclosure partition wall (6) thereby making the separation between the first treatment zone (3) and the second treatment zone (4).

6. The facility (1) according to claim 4, **characterised in that** the first treatment zone (3) and the second treatment zone (4) are spaced apart from each other, the enclosure (20) of the second treatment zone (4) comprising a front wall (21) provided with an inlet port (22) through which the conveyor belt (2) enters the second treatment zone (4).

7. The facility (1) according to any of the preceding claims, **characterised in that** the washing nozzles (9, 10) are orientable with respect to an axis (A) perpendicular to the conveyor belt (2).

8. The facility (1) according to any of the preceding claims, **characterised in that** the first treatment zone (3) comprises complementary washing nozzles (35a, 35b).

9. The facility (1) according to any of the preceding claims, **characterised in that** the chamber (5) comprises washing ramps (36), to allow washing of the chamber (5).

10. The facility (1) according to any of the preceding claims, **characterised in that** the chamber (5) comprises a lower wall (15) having an aperture (16), to allow discharge of the washing solution.

11. A method for treating a conveyor belt (2) for conveying agri-food products by means of a treatment facility (1) according to any of the preceding claims, **characterised in that** it comprises the steps of:
- moving the conveyor belt (2) through both treatment zones (3; 4);
- in the chamber (5) of the first treatment zone (3), spraying, at least via the first washing nozzle (9) and the second washing nozzle (10), a washing solution jet towards the upper face (11) and the lower face (12) of the conveyor belt (2), and
- in the second treatment zone (4), spraying dry steam or an infrared electromagnetic radiation or an ultraviolet electromagnetic radiation, towards the upper face (11) and the lower face (12) of the conveyor belt (2).

12. The method according to claim 11, **characterised in that** the moving velocity of the conveyor belt (2) is between 0.5 and 5 metres per minute, the velocity of the washing solution at the output of the first nozzle (9) and the second nozzle (10), is between 60 and 150 metres per second for a pressure between 50 and 400 relative millibars.

13. The method according to any of claims 11 and 12, **characterised in that** it comprises a step of heating water prior to injecting water in the first washing nozzle (9) and the second washing nozzle (10).

14. The method according to any of claims 11 and 12, **characterised in that** it comprises a prior step of injecting water into air before air is injected into the first washing nozzle (9) and the second washing nozzle (10).

15. The method according to any of claims 11 to 14, **characterised in that** it comprises a step of drying the conveyor belt (2) by stopping injecting water into the first washing nozzle (9) and the second washing nozzle (10).
